# FASCICULE DE BREVET EUROPEEN

(11) **EP 3 900 294 B1**
(45) Date de publication et mention de la délivrance du brevet: **27.11.2024**
(21) Numéro de dépôt: 19839365.4
(22) Date de dépôt: 04.12.2019
(51) Int. Cl.: H04L 9/40, H04L 65/1069, H04L 65/65, H04W 12/02

(54) **PROCESSUS DE DÉCLARATION DE NON-EXPLOITABILITÉ DE DONNÉES ÉCHANGÉES**
VERFAHREN ZUR ERKLÄRUNG DER NICHTVERWENDBARKEIT VON AUSGETAUSCHTEN DATEN
PROCESS FOR DECLARING THE NON-USABILITY OF EXCHANGED DATA

(30) Priorité: 21.12.2018 FR 1874000
(43) Date de publication de la demande: 27.10.2021
(73) Titulaire: Orange, 92130 Issy-les-Moulineaux (FR)
(72) Inventeur: GESTRAUD, Yann, 92326 CHÂTILLON CEDEX (FR); SUART, Christophe, 92326 CHÂTILLON CEDEX (FR)
(74) Mandataire: Plasseraud IP
(86) Numéro de dépôt international: PCT/FR2019/052927
(87) Numéro de publication internationale: WO 2020/128204

(56) Documents cités:
- US-A1- 2002 053 029
- US-A1- 2013 268 357

## Description

### Domaine technique

L'invention relève du domaine des réseaux de télécommunication. En particulier, elle concerne un procédé et un système de déclaration de non-exploitabilité de données échangées, pour mettre en œuvre une sécurisation d'une communication entre plusieurs terminaux.

De nombreuses solutions de télécommunications existent aujourd'hui pour établir une communication entre les terminaux de plusieurs utilisateurs par connexion de ces terminaux à un ou plusieurs réseaux dont les accès sont fournis par un opérateur de télécommunication, par exemple via l'Internet.

Cependant, différents utilisateurs peuvent souscrire à des opérateurs différents, ces opérateurs fournissant des services et des accès à des réseaux qui ne sont pas nécessairement identiques. Ces solutions doivent donc pouvoir établir des communications sur des réseaux gérés par des opérateurs différents.

Dans ce contexte, il est connu différentes normes de télécommunication mobile, par exemple le protocole RCS (« *Rich Communication Suite* », en anglais), qui définit un standard de communication permettant d'initier une communication enrichie entre deux terminaux compatibles avec ce protocole.

Définie par la GSMA (« *Global System for Mobile Communications Association* », en anglais), ce protocole RCS permet l'échange de messages ou de fichiers entre des utilisateurs ayant souscrit à des opérateurs différents. Ce protocole de communication est utilisé entre les réseaux de deux opérateurs différents de téléphonie mobile, et entre un cœur de réseau d'un opérateur et les téléphones des utilisateurs abonnés à celui-ci. Ce protocole permet aussi de remplacer les messages textes simples par un système de messagerie enrichie pour transmettre des flux multimédia plus élaborés.

Ainsi, il est possible à plusieurs utilisateurs de converser par la voix, d'ajouter un flux vidéo à la communication, d'envoyer des messages multimédia, de créer des groupes de discussion, de partager une localisation, de superposer des images à une fenêtre de conversation vidéo, ou encore d'échanger un fichier quelconque avec un ou plusieurs contacts dont les terminaux sont compatibles avec la norme RCS mais n'ayant pas nécessairement souscrit au même opérateur.

Les protocoles de communications tels que le protocole RCS permettent ainsi à différents utilisateurs de communiquer entre eux sans nécessairement souscrire au même opérateur, l'infrastructure et les serveurs utilisés pour leurs communications n'appartenant pas nécessairement à un même fournisseur de service.

Cependant, bien qu'un opérateur fournissant un accès réseau à un terminal émetteur garantit le respect de règles d'exploitabilité données du contenu des communications sur le réseau, d'autres opérateurs, par exemple l'opérateur du terminal destinataire, ne vont pas nécessairement respecter ces mêmes règles. L'exploitation de ces communications est donc permise à l'insu des utilisateurs, ce qui amène plusieurs inconvénients.

Un premier inconvénient est que le débit de messages échangés au cours d'une communication de groupe entre plusieurs terminaux peut être affecté négativement en cas d'une connexion d'un équipement tiers à la communication, par exemple un terminal supplémentaire s'ajoutant dans la communication ou un agrégateur tentant de capter les messages échangés.

Un autre inconvénient est qu'à des fins d'exploitation commerciales, de nombreux opérateurs captent et analysent les données échangées sur les réseaux auxquels ils donnent accès, par exemple, des images et des fichiers partagés au cours des communications. Par exemple, de nombreux opérateurs donnent accès à des assistants virtuels qui sont configurés pour lire, post-traiter, enregistrer et analyser le contenu des communications textuelles et vocales entre les utilisateurs de ces réseaux.

En outre, le nombre croissant de dispositifs d'intelligence artificielle ou plus généralement capables d'analyser de très grandes quantités de données implique que de plus en plus de communications sont soumises à un examen de leur contenu par des équipements tiers, parfois à l'insu des utilisateurs ou sans permettre à ces utilisateurs de limiter ou d'interdire, pendant ou après la communication, l'exploitation des données envoyées ou reçues.

Il existe donc un besoin de pouvoir sécuriser et garder confidentiel les messages et les signaux échangés lors d'une communication entre les terminaux de plusieurs utilisateurs, et en particulier de permettre la gestion de l'exploitabilité de ces signaux.

US 2002/053029 concerne un procédé de contrôle d'accès au réseau pour un système de réseau comprenant des appareils de réseau ayant une fonction de filtrage de paquets.

### Objet et résumé de l'invention

L'invention est définie dans les revendications ci-attachées. Les modes de réalisation sont définis dans les revendications dépendantes.

### Brève description des dessins

D'autres caractéristiques, détails et avantages de l'invention apparaîtront à la lecture de la description détaillée ci-après, et à l'analyse des dessins annexés, sur lesquels :
[Fig. 1], la figure 1, représente une vue schématique d'un environnement comportant notamment deux terminaux et un réseau pour sécuriser une communication selon un mode de réalisation particulier de l'invention ;
[Fig. 2], la figure 2, représente, sous forme d'organigramme, un exemple d'étapes d'un procédé de détermination selon un mode de réalisation particulier de l'invention ;
[Fig. 3], la figure 3, [Fig. 4], la figure 4, et [Fig. 5], la figure 5, représentent des vues schématiques d'un environnement comportant notamment deux terminaux et deux réseaux pour sécuriser une communication selon un mode de réalisation particulier de l'invention ;
[Fig. 6], la figure 6, représente une vue schématique d'un environnement comportant notamment trois terminaux et un réseau pour sécuriser une communication selon un mode de réalisation particulier de l'invention ;
[Fig. 7], la figure 7, représente une vue schématique d'un environnement comportant notamment trois terminaux et deux réseaux pour sécuriser une communication selon un mode de réalisation particulier de l'invention ; et
[Fig. 8], la figure 8, représente une vue schématique d'un système de sécurisation d'une communication selon un mode de réalisation particulier de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

Dans les présentes, une communication entre plusieurs utilisateurs, plusieurs terminaux et/ou les interfaces homme-machine de ces terminaux consiste en un échange de messages. En outre, l'envoi et la réception de messages particuliers provoque un changement d'état interne de ces éléments. Par exemple, l'envoi d'un message enrichi d'un premier terminal vers un deuxième terminal par l'intermédiaire d'un réseau peut provoquer la modification d'une base de données interne de ce deuxième terminal, ou encore le déclenchement d'une action de commande à distance d'un élément connecté à un nœud du réseau.

Dans les présentes, un nœud de réseau est un élément physique connecté au réseau et configuré pour transmettre des flux de signaux depuis et vers un terminal et/ou un autre nœud de réseau. Un tel élément est par exemple un serveur, un poste de travail, un routeur, une imprimante ou un télécopieur. Typiquement, un nœud de réseau est connecté au réseau par l'intermédiaire d'une carte de réseau ou d'un pilote de réseau local.

Dans les présentes, différentes entités sont connectées entre elles par l'intermédiaire de différents moyens, par exemple via une connexion filaire de type Ethernet ou CPL, une connexion sans fil, par exemple de type WiFi ou Bluetooth, ou tout autre type de connexion pouvant varier selon le matériel préféré pour la mise en œuvre de l'invention.

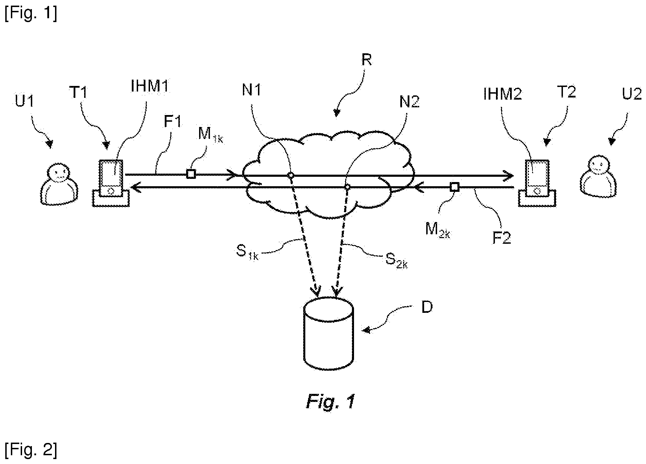

Un mode de réalisation de l'invention est à présent décrit en référence à la figure 1, qui représente schématiquement un environnement permettant la mise en œuvre d'un procédé de communication sécurisé entre deux utilisateurs.

Cet environnement comporte notamment un premier terminal T1 d'un premier utilisateur U1, une première interface IHM1 homme-machine installée sur ce premier terminal T1, un deuxième terminal T2 d'un deuxième utilisateur U2 et une deuxième interface IHM2 homme-machine installée sur ce deuxième terminal T2. En variante, le réseau R peut consister de plusieurs réseaux R1, R2, R3, ... interconnectés.

L'environnement comporte en outre un réseau R pour mettre en œuvre une communication, par exemple un échange de messages enrichis selon un protocole RCS, entre le premier terminal T1 et le deuxième terminal T2. Des accès au réseau R peuvent être fournis aux terminaux par un ou plusieurs opérateurs. La communication est initiée par le premier terminal T1 ou par le deuxième terminal T2.

Un message ou un flux de signaux échangé entre des terminaux via un réseau R transite par au moins un nœud de réseau N du réseau R. Comme représenté, le terminal T1 peut émettre un flux F1 de signaux transitant par un nœud N1 du réseau R et le terminal T2 peut émettre un autre flux F2 de signaux transitant par un nœud N2 du même réseau. Le nœud N1 peut éventuellement être identique au nœud N2. Le flux F1 comprend une pluralité de signaux S1k, le flux F2 comprend une pluralité de signaux S2k, ces signaux pouvant être de types différents.

Dans les présentes, on dénote le premier indice « i » d'un flux dénoté « Fi » et d'un signal dénoté Sik dans ce flux comme désignant le terminal « Ti » à partir duquel ce flux est transmis. Le deuxième indice « k » de ce signal « Sik » désigne le type de signal transmis dans ce flux.

Selon un mode de réalisation de l'invention, un signal peut être de type textuel, audio, vidéo ou audio-visuel. Par exemple, un flux F1 transmis par un terminal T1 comprend un signal de type textuel, S11, lorsque l'indice « k » est égal à 1, un signal de type audio, S12, lorsque l'indice « k » est égal à 2, un signal de type vidéo, S13, lorsque l'indice « k » est égal à 3, un signal de type audio-visuel, S14, lorsque l'indice « k » est égal à 4, etc.

En conjonction avec cet environnement, un équipement D tiers peut être configuré pour accéder au réseau R, et en particulier, pour se connecter à un nœud du réseau R en vue de capter des signaux du flux F1 ou F2 transitant par ce nœud.

Dans les présentes, on signifie par « capter un signal » que l'équipement D tiers peut lire un signal sans l'enregistrer en mémoire, enregistrer un signal sans le lire ou le traiter, enregistrer un signal en le lisant ou en le traitant et/ou transmettre ce signal à un dispositif connecté à l'équipement D tiers mais pas nécessairement au réseau R.

A tout moment au cours d'une communication établie entre les deux terminaux T1 et T2, l'équipement D tiers peut capter un signal S1k dans le flux F1 en se connectant au nœud N1 et/ou capter un signal S2k dans le flux F2 en se connectant au nœud N2.

En outre, un utilisateur « Ui » a la possibilité de sélectionner, par l'intermédiaire de son terminal « Ti », au moins un indice « Mik » d'exploitabilité d'un signal « Sik » que comprend un flux « Fi » transmis depuis ce terminal.

Dans les présentes, on dénote par « Mik » l'indice d'exploitabilité du type du signal dénoté « Sik » dans un flux « Fi » comme désignant le terminal à partir duquel ce flux est transmis. Le premier indice « i » et le deuxième indice « k » de cet indice d'exploitabilité « Mik » ont la même signification que les premier et deuxième indices du signal « Sik » correspondant.

Durant ou préalablement à la transmission d'un flux par un terminal, ou préalablement à cette transmission, l'utilisateur U1 du premier terminal T1 sélectionne la valeur d'au moins un indice d'exploitabilité M1k pour un type de signal « k » que comprend le flux F1 à transmettre vers le réseau R ou vers au moins un nœud de réseau du réseau R, ce flux étant par la suite reçu par le terminal T2.

Ainsi, l'utilisateur U1 sélectionne une valeur d'un ou de plusieurs indices d'exploitabilité M1k parmi M11, M12, M13, M14, ..., etc. afin de définir l'exploitabilité des signaux textes, S11, des signaux audio, S12, des signaux vidéo, S13, et/ou des signaux audio-visuels, S14, transmis par son terminal T1 vers le réseau R, puis vers T2 et/ou vers d'autres terminaux connectés à R. De manière similaire, l'utilisateur U2 sélectionne la valeur d'au moins un indice M2k d'exploitabilité pour un type de signal S2k que comprend le flux F2 à transmettre vers le réseau R, ce flux étant par la suite reçu par le terminal T1.

Par exemple, l'utilisateur U1 sélectionne la valeur d'un indice M11 d'exploitabilité qui interdit l'exploitabilité de signaux de texte dans le flux F1, et l'utilisateur U2 sélectionne la valeur d'un indice M22 d'exploitabilité qui autorise l'accès en lecture de signaux audio. Les définitions possibles des indices d'exploitabilité sélectionnables seront expliquées dans la suite.

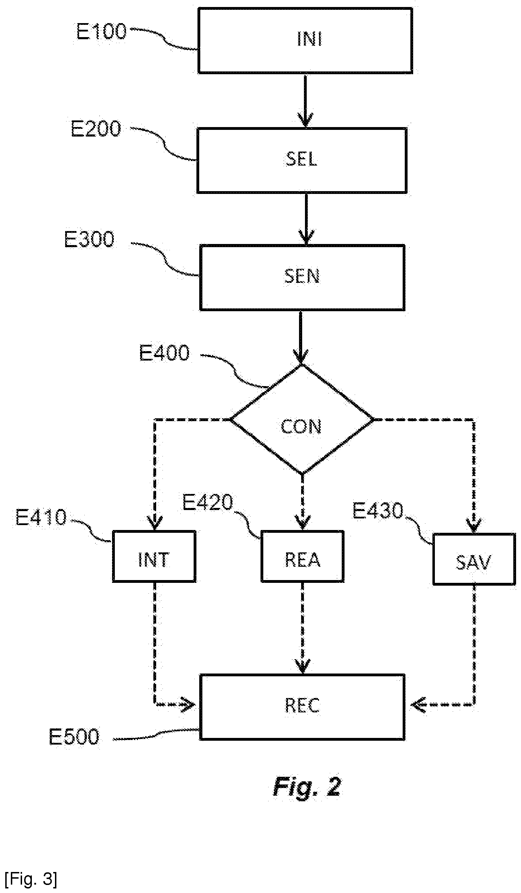

Un mode de réalisation de l'invention est à présent décrit en référence à la figure 2, qui représente, sous forme d'organigramme, plusieurs étapes d'un procédé de sécurisation d'une communication selon un mode de réalisation de l'invention.

Selon un mode de réalisation de l'invention, le procédé comprend une étape E100, INI, dite étape d'initialisation. Cette étape E100 comprend une sous-étape préalable de démarrage du terminal par l'utilisateur au cours de laquelle le terminal demande une identification de l'utilisateur ou une authentification du terminal sur un ou plusieurs réseaux auprès d'un opérateur fournissant des accès à ce ou à ces réseaux.

Selon un mode de réalisation de l'invention, l'étape E100 comprend une sous-étape d'échange d'informations relatives aux capacités des terminaux. Cet échange permet, par exemple, de s'assurer que chaque utilisateur a la capacité de traiter la communication. Cet échange d'informations permet aussi, par exemple, de garantir qu'au moins deux utilisateurs ont souscrit auprès d'un opérateur de télécommunications fournissant un accès au même réseau ou à des réseaux distincts compatibles pour transmettre la communication depuis un terminal vers un autre. Par la suite, le procédé permet aux opérateurs de prendre en compte ces indices d'exploitabilité de manière simple et directe.

Le procédé comprend en outre une étape E200, SEL, dite étape de sélection, qui est mise en œuvre par le terminal T1, au cours de laquelle une valeur d'au moins un indice d'exploitabilité de signaux dans un flux est définie, et quelle valeur. Par exemple, l'interface IHM1 homme-machine du terminal T1 peut demander à l'utilisateur U1 s'il souhaite attribuer un indice d'exploitabilité d'un futur message qu'il souhaite transmettre au cours de la communication. Cette étape E200 de sélection sera expliquée par la suite.

Selon un mode de réalisation de l'invention, l'étape E100 et/ou l'étape E200 comprend une sous-étape d'invitation à une connexion, notamment via l'envoi d'un message d'initiation de la communication depuis le terminal vers le réseau et/ou à au moins un autre terminal, avant qu'un flux de signaux de la communication ne soit transmis vers le réseau ou l'autre terminal. Ce message d'initiation est configuré pour être capté par un dispositif, un terminal ou un équipement tiers qui se connecte au réseau R via un nœud par lequel transite un flux de signaux transmis au cours de la communication.

Selon un mode de réalisation de l'invention, le message d'initiation comprend une requête d'invitation qui transite par au moins un nœud d'un réseau avant de parvenir aux autres terminaux participant à la communication. Par exemple, un terminal T1 appelant peut émettre une demande de communication à destination d'un autre terminal T2 par l'envoi d'un message INVITE selon un protocole SIP.

Selon un mode de réalisation de l'invention, le message d'initiation est conforme à un protocole de communication tel qu'un protocole RCS, un protocole SDP, un protocole RTSP, un protocole SIP ou encore toute autre combinaison possible de protocoles adaptés.

Le procédé comprend en outre une étape E300, SEN, dite étape de transmission, qui est mise en œuvre par le terminal T1, au cours de laquelle T1 envoie un flux F1 de signaux vers un ou plusieurs réseaux R, en particulier vers des nœuds de ce ou de ces réseaux. Le flux F1 est ensuite transmis du ou des réseaux R vers au moins le deuxième terminal T2 connecté à R.

Selon un mode de réalisation de l'invention, le message d'initiation comprend les indices d'exploitabilité de signaux tels que sélectionnés au cours de l'étape E200. Ceci permet à un terminal ou à un équipement D tiers se connectant au réseau R de lire et de vérifier une compatibilité avec ces indices d'exploitabilité de manière systématique.

Dans le cas où un protocole RCS est utilisé, une communication peut être établie en combinaison avec l'emploi d'un protocole SIP à des fins de signalisation. Par exemple, une requête d'initialisation SIP contenant des attributs conformes au protocole SDP est émise par le terminal en tant que message d'initialisation ou dans celui-ci pour démarrer la communication, transmise par au moins un nœud de réseau. Cette requête met en œuvre une session SIP au cours de laquelle, ou avant laquelle, un échange de capacités entre les terminaux est réalisé pour vérifier que le terminal destinataire de la communication a la capacité de traiter le type de communication initiée par le terminal émetteur. Dès lors, un terminal ou un équipement D tiers se connectant au réseau R pour capter la communication prend en compte cette requête.

Une communication peut aussi être établie en employant plusieurs protocoles, par exemple un protocole RCS, SIP et SDP pour mettre en œuvre des sessions de communication multimédia. Une telle combinaison permet l'annonce d'une session, l'invitation à la session et la négociation de paramètres. L'utilisation d'un protocole SDP permet aussi de créer un environnement de communication sans livrer le flux lui-même ni les signaux qu'il comprend, par exemple des signaux multimédia.

Dans le cas où un protocole SDP est utilisé pour mettre en œuvre la communication, le message d'invitation est un message SDP composé de plusieurs sections, par exemple trois sections, dont une première section relative aux paramètres décrivant la session de communication, une deuxième section relative à la synchronisation temporelle de la communication et une troisième section fournissant une description des types de signaux transmis au cours de la communication.

Un message SDP d'invitation est par exemple composé de différentes lignes « <caractère>=<valeur> », où « <caractère> » dénote une lettre alphabétique et où « <valeur> » est un texte structuré. Une description de la session peut être donnée par « o= (identificateur d'origine et de session: nom d'utilisateur, identifiant, numéro de version, adresse réseau) » pour définir l'initiateur et/ou le destinataire de la communication. Une description de la synchronisation temporelle de la session peut par exemple être donnée par « t= (heure à laquelle la session s'active) ». Une description des types de signaux transmis au cours de la communication peut par exemple être donnée par « m= (nom du média et adresse du transport) ».

Selon un mode de réalisation de l'invention, l'étape E100 d'initialisation et/ou l'étape E200 de sélection comprennent l'ajout d'un indice d'exploitabilité, par exemple un attribut dans un message d'initialisation ou dans une requête d'invitation, pour indiquer si et quand les signaux du flux peuvent être exploités.

Par exemple, l'ajout d'un indice d'exploitabilité comprend l'écriture, dans le message d'invitation, d'au moins un attribut supplémentaire pour définir l'exploitabilité des signaux qui seront échangés au cours de la communication, cet attribut comprenant une ligne dénotée «<datausability>=<valeur>» dans une section d'un message SDP.

Selon un mode de réalisation de l'invention, l'étape E100 d'initialisation et/ou l'étape E200 de sélection comprennent l'ajout d'un indice d'exploitabilité dans un ou plusieurs signaux du flux.

Avantageusement, un indice d'exploitabilité compris dans un signal du flux de signaux est transmissible en tant que métadonnée, ce qui évite l'utilisation d'un protocole SDP ou d'autres protocoles utilisables pour la négociation, la signalisation et/ou la transmission de la communication.

Par exemple, plusieurs signaux textuels peuvent être transmis de façon indépendante dans un flux au moyen d'un format CPIM (« *Common Presence and Instant Messaging* », en anglais), qui est un format de messages de type mime selon une norme RFC 3862. Lorsqu'un équipement D tiers se connecte à un nœud de réseau pour capter au moins un signal textuel, par exemple pour archiver les échanges textuels de la communication, l'équipement D conservera aussi l'indice d'exploitabilité en tant que métadonnée sous une forme conforme au format CPIM, qui définit une enveloppe des signaux échangés.

Selon un mode de réalisation de l'invention, un indice d'exploitabilité définit quelle est l'exploitabilité d'un signal en fonction de son type. Lorsqu'un flux « Fi » est émis depuis un terminal « Ti », ce flux peut comprendre un signal Si1 textuel, un signal Si2 audio, un signal Si3 vidéo ou un signal Si4 audio-visuel dont l'exploitabilité peut être définie différemment en fonction des attributs correspondants aux indices Mi1, Mi2, Mi3 et Mi4 respectifs.

Le procédé comprend en outre une étape E400, CON, dite étape de connexion, qui est mise en œuvre lorsqu'un équipement tiers D se connecte à au moins un nœud du réseau R.

Lorsque cet équipement tiers D se connecte au nœud de réseau, il effectue préalablement une lecture du ou des indices d'exploitabilité de signaux du ou des flux transmis par l'intermédiaire de ce nœud de réseau et il vérifie s'il peut accéder, lire, traiter et/ou post-traiter les signaux en fonction des valeurs de ces indices d'exploitabilité.

En particulier, lorsque la communication est mise en œuvre via un protocole RCS, SDP et/ou SIP, un équipement tiers D qui se connecte à un nœud de réseau vérifie si celui-ci peut exploiter et plus généralement capter les signaux conformément à la ligne «<datausability>=<valeur>» présente dans le message SDP ou le message d'un autre type de protocole, à l'origine de la communication et ayant été transmis au nœud de réseau.

Selon un mode de réalisation de l'invention, l'étape de connexion E400 comprend une sous-étape E410 d'interdiction d'accès de l'équipement D tiers aux signaux correspondants si l'indice d'exploitabilité est un attribut d'interdiction.

Dans les présentes, la mise en œuvre d'une sous-étape d'interdiction d'accès signifie qu'aucun accès aux signaux n'est autorisé à l'équipement D tiers, et donc qu'un traitement de ces signaux n'est pas possible lorsque l'équipement D tiers est connecté au nœud de réseau ou après que l'équipement D tiers se soit connecté au nœud de réseau.

Ainsi, si l'indice d'exploitabilité est un attribut d'interdiction, l'exploitation de signaux enregistrés est interdite par l'équipement D tiers. Dans le cas où un équipement non-tiers, c'est-à-dire un équipement auquel l'opérateur ou l'utilisateur a donné une autorisation d'accès et/ou une autorisation de traitement des signaux transmis au cours de la communication sur le réseau R, se connecte au nœud de réseau, cet équipement non-tiers peut ne pas tenir compte de l'indice d'exploitabilité.

Par exemple, cette sous-étape E410 est mise en œuvre lorsque le message d'invitation à la communication comprend une ligne «<datausability>=<valeur>» dans laquelle la valeur est définie comme étant « none » pour interdire toute exploitation du ou des signaux correspondants d'un flux de la communication transmise par la suite.

A titre illustratif, un attribut d'interdiction peut comprendre une valeur numérique « 1 » ou une valeur textuelle « none » définissant la valeur d'un indicateur d'exploitabilité M11 lorsqu'un utilisateur souhaite qu'aucun signal S11 textuel dans un flux F1 émis depuis son terminal T1 ne soit exploitable par un équipement tiers.

Selon un mode de réalisation de l'invention, l'étape de connexion E400 comprend une sous-étape E420 de lecture des signaux par l'équipement D tiers si l'indice d'exploitabilité est un attribut de traitement.

Dans les présentes, la mise en œuvre d'une sous-étape de lecture signifie qu'un traitement des signaux, par exemple un enregistrement, est autorisé, lorsque l'équipement D tiers est connecté au nœud de réseau.

Par exemple, cette sous-étape E420 est mise en œuvre lorsque le message d'invitation à la communication comprend une ligne «<datausability>=<valeur>» dans laquelle la valeur est définie comme étant « live » pour autoriser une exploitation des signaux d'un flux mais seulement au cours de la communication.

A titre illustratif, un attribut de traitement peut comprendre une valeur numérique « 2 » ou une valeur textuelle « live » définissant la valeur d'un indicateur d'exploitabilité M22 lorsqu'un utilisateur souhaite qu'un signal S22 audio dans un flux F2 émis depuis son terminal T2 soit exploitable par un équipement D tiers, mais uniquement durant la durée de la communication.

Selon un mode de réalisation de l'invention, l'étape de connexion E400 comprend une sous-étape E430 de post-traitement des signaux par l'équipement tiers si l'indice d'exploitabilité est un attribut de post-traitement.

Dans les présentes, la mise en œuvre d'une sous-étape de post-traitement signifie qu'un traitement des signaux, en particulier un enregistrement des signaux, est autorisé lorsque l'équipement D tiers est connecté au nœud de réseau ou après que l'équipement D tiers se soit connecté au nœud de réseau.

Par exemple, cette sous-étape E430 est mise en œuvre lorsque le message d'invitation à la communication comprend une ligne «<datausability>=<valeur>» dans laquelle la valeur est définie comme étant « post » pour autoriser une exploitation des signaux d'un flux mais seulement après que la communication ne soit terminée.

A titre illustratif, un attribut de traitement peut comprendre une valeur numérique « 3 » ou une valeur textuelle « post » définissant la valeur d'un indicateur d'exploitabilité M33 lorsqu'un utilisateur souhaite qu'un signal S33 vidéo dans un flux F3 émis depuis son terminal T3 soit exploitable par un équipement tiers uniquement après la communication.

Dans les présentes, un enregistrement d'un signal est un cas particulier de traitement ou de post-traitement de ce signal. Ainsi, si l'indice d'exploitabilité est un attribut de traitement ou un attribut de post-traitement, le traitement des signaux peut être mis en œuvre par l'équipement D tiers avec ou sans enregistrement de ces même signaux.

Par exemple, pour mettre en œuvre un enregistrement d'un signal lu par un équipement D tiers au cours d'une sous-étape E420 de lecture, l'indice d'exploitabilité peut être un attribut de traitement avec enregistrement. En variante, pour interdire un enregistrement d'un signal lu par un équipement D tiers au cours d'une sous-étape E420 de lecture, l'indice d'exploitabilité peut être un attribut de traitement sans enregistrement.

Par exemple, pour mettre en œuvre un enregistrement d'un signal lu par un équipement D tiers au cours d'une sous-étape E430 de post-traitement, l'indice d'exploitabilité peut être un attribut de post-traitement avec enregistrement. En variante, pour interdire un enregistrement d'un signal lu par un équipement D tiers au cours d'une sous-étape E430 de lecture, l'indice d'exploitabilité peut être un attribut de post-traitement sans enregistrement.

Ceci permet à l'utilisateur de fournir une autorisation d'accès ou une interdiction de stockage des signaux échangés au cours de la communication tout en permettant simultanément leur traitement ou leur post-traitement.

Selon d'autres modes de réalisation de l'invention non représentés, l'invention peut être étendue de sorte à tenir compte d'autres attributs que les trois attributs d'interdiction, de traitement et de post-traitement. Par exemple, une connexion d'un équipement tiers à un nœud pourrait être mise en œuvre en fonction d'un indice d'exploitabilité qui comprend un attribut de cryptage ou de post-cryptage, cet attribut autorisant le post-trairement, par exemple un enregistrement d'un signal donné par l'équipement tiers mais conditionnant sa lecture pendant ou après la communication à l'entrée d'un mot de passe choisi par l'utilisateur avant la transmission de ce signal, etc.

Selon un mode de réalisation de l'invention, un indice d'exploitabilité peut être complété avec une information concernant au moins un destinataire d'un signal émis par le terminal initiant la communication.

Ainsi, le terminal « Ti » peut être configuré pour compléter un indice « Mik » d'exploitabilité avec une information « Mikl » supplémentaire, le troisième indice « I » dénotant le terminal « TI » destinataire.

En variante, le troisième indice « I » peut dénoter l'équipement D tiers ayant capté le ou les signaux « Sik ». Par exemple, si un équipement D tiers a traité ou enregistré le flux F2 de signaux S21 textuels envoyé par un terminal T2 au cours d'une communication entre trois terminaux T1, T2 et T3, une information « M21D » peut être traitée ou enregistrée sur l'un des terminaux ou sur l'équipement D tiers, par exemple en vue d'une consultation ultérieure.

Cette information peut aussi être complétée pour préciser si ou quand la captation du ou des signaux « Sik » a impliqué une lecture, un traitement, un post-traitement, un enregistrement, etc. Par exemple, si un terminal T2 a reçu le flux F1 de signaux S1k envoyé par un terminal T1 au cours de la communication et qu'un terminal T3 s'ajoute à cette communication entre T1 et T2 pour lire un signal audiovisuel S14 associé à un indice M14 d'exploitabilité, une information M143 peut être traitée ou enregistrée sur l'un des terminaux. Cette information peut être transportée dans un signal émis depuis le terminal T3 ou le nœud de réseau auquel s'est connecté T3 pour lire le signal S14.

Typiquement cette information supplémentaire est obtenue en renvoyant vers le terminal émetteur un nouveau signal comprenant cette information, depuis un nœud de réseau auquel s'est connecté le terminal « TI » ou l'équipement tiers ayant capté le ou les signaux « Sik ».

Selon un mode de réalisation de l'invention, un indice d'exploitabilité peut être enregistré à tout moment sur un terminal, sur un nœud de réseau ou sur un équipement tiers. Cet enregistrement permet, par exemple, la constitution d'un historique de l'exploitabilité sélectionnée des signaux ou des messages d'un utilisateur, qui peut être consulté par la suite afin de contrôler quel signal a été transmis depuis son terminal, et éventuellement capté par la suite, par exemple pour stocker un ensemble d'occurrences de lecture, de post-traitement ou d'interdictions d'accès faites pour un signal donné.

Ceci permet aussi d'associer, à tout signal émis, une preuve d'accès de ce signal pour vérifier la sécurisation de la communication pendant ou après que celle-ci soit mise en œuvre.

Le procédé comprend en outre une étape 500, REC, dite étape de réception, qui est mise en œuvre par au moins un deuxième terminal T2, du flux F1 depuis au moins un nœud.

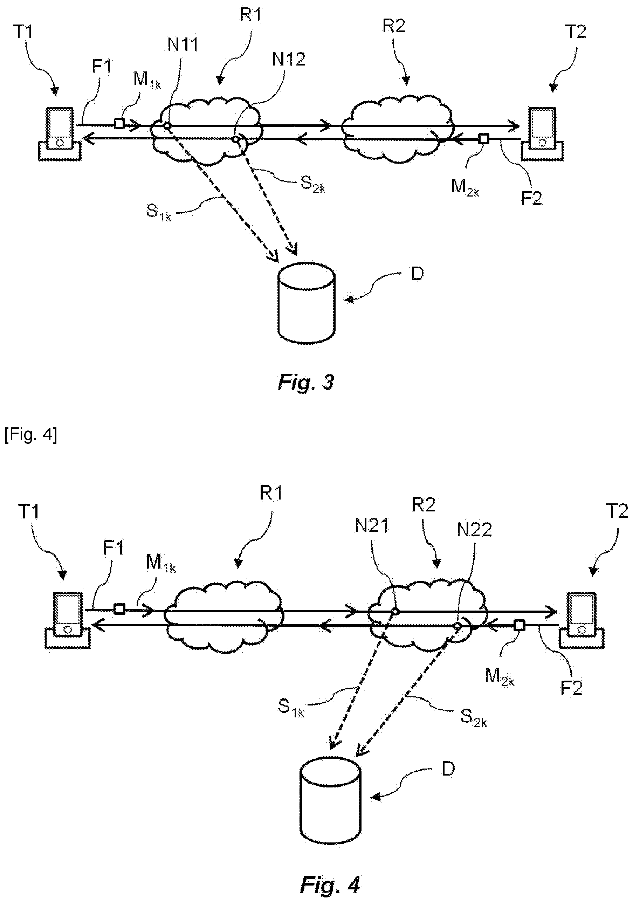

Dans le cas de l'exemple illustré sur la figure 3, un premier terminal T1 est configuré pour transmettre un flux F1 via un premier réseau R1 et via un deuxième réseau R2. Un deuxième terminal T2 peut être configuré pour transmettre un flux F2 via le deuxième réseau R2 et via le premier réseau R1. Les deux réseaux R1 et R2 permettent une transmission de flux entre eux indépendamment des configurations de T1 et de T2, bien que les accès à ceux-ci puissent être fournis par deux opérateurs différents.

Si un équipement D tiers, par exemple un agrégateur d'un opérateur donnant accès à R1, est configuré pour pouvoir se connecter uniquement au premier réseau R1, il peut lire, traiter ou enregistrer des signaux des deux flux en captant un signal S1k de F1 depuis un nœud N11 du réseau R1 et/ou un signal S2k de F2 depuis un autre nœud N12 du même réseau R1. L'équipement D tiers lira et recevra donc les indices d'exploitabilité correspondants M1k et M2k, ce qui sécurise l'exploitabilité de la communication lorsque l'équipement D tiers n'est configuré que pour se connecter qu'au seul premier réseau R1.

Une situation similaire est montrée sur la figure 4: si un équipement D tiers, par exemple un agrégateur d'un opérateur donnant accès à R2, est configuré pour pouvoir se connecter uniquement au réseau R2, il lui est dans ce cas possible de lire, de traiter ou d'enregistrer des signaux des deux flux en captant un signal S1k de F1 depuis un nœud N21 du réseau R2 et/ou un signal S2k de F2 depuis un autre nœud N22 du même réseau R2. L'équipement D tiers lira et recevra donc les indices d'exploitabilité correspondants M1k et M2k, ce qui sécurise l'exploitabilité de la communication lorsque l'équipement D tiers n'est configuré que pour se connecter qu'au seul deuxième réseau R2.

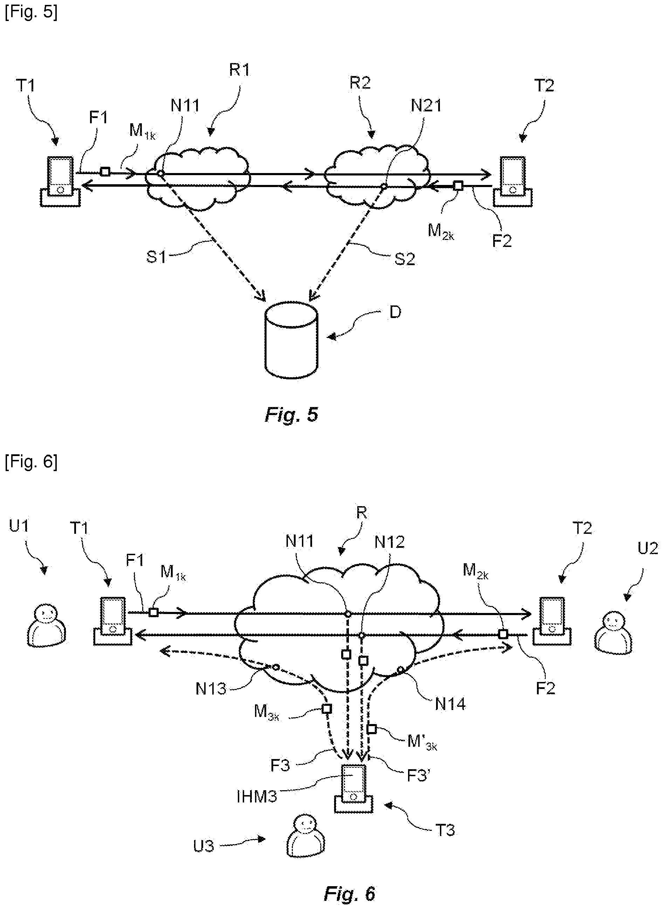

Une autre situation est illustrée sur la figure 5, lorsqu'un équipement D tiers, par exemple un agrégateur d'un opérateur donnant accès à R1 et à R2, est configuré pour se connecter à l'un ou l'autre des deux réseaux R1 et R2. Il lui est dans ce cas par exemple possible de lire, de traiter ou d'enregistrer des signaux des deux flux en captant un signal S1k de F1 depuis un nœud N11 du réseau R1 et un signal S2k de F2 depuis un nœud N21 du réseau R2. L'équipement D tiers lira et recevra donc les indices d'exploitabilité correspondants M1k et M2k, ce qui permet de sécuriser la communication lorsque l'équipement D tiers peut se connecter aux deux réseaux R1 et R2.

Un mode de réalisation de l'invention est à présent décrit en référence à la figure 6, qui représente un environnement comportant deux terminaux T1 et T2 en communication l'un avec l'autre par l'intermédiaire d'un même réseau R comportant deux nœuds N11 et N12, et à laquelle un équipement tiers se connecte. L'équipement tiers est ici un troisième terminal T3 configuré pour interagir avec un utilisateur U3 correspondant via une interface IHM3 homme-machine.

Le procédé de l'invention s'applique ainsi également dans le cas où l'équipement tiers est un terminal T3, qui est configuré pour intervenir dans la communication. T3 peut non seulement capter des flux émis depuis T1 et T2 par l'intermédiaire d'un réseau R auquel T1, T2 et T3 peuvent accéder via leurs opérateurs correspondants, mais aussi transmettre des flux F3 et F3' de signaux à destination de T1 et T2. Le terminal T3 peut par exemple capter des signaux du flux F1 en un nœud N11 et des signaux du flux F2 en un nœud N12.

Ainsi, le procédé de sécurisation de l'invention interdit au terminal T3 d'accéder aux signaux de F1 ou de F2 si le ou les indices d'exploitabilité correspondants sont des attributs d'interdiction ; T3 est autorisé à lire ces signaux si le ou les indices d'exploitabilité correspondants sont des attributs de traitement ; et T3 est autorisé à traiter ou à enregistrer ces signaux si le ou les indices d'exploitabilité correspondants sont des attributs de post-traitement.

Le procédé de sécurisation de l'invention permet aussi à l'utilisateur U3 de sélectionner sur son terminal T3 des indices M3k et M'3k d'exploitabilité de signaux dans des flux, en particulier des signaux dans un flux F3 transmis depuis T3 vers un nœud N13 du réseau R puis vers le terminal T1, et dans un flux F3' transmis depuis T3 vers un nœud N14 puis vers le terminal T2, au cas où un équipement tiers ou un nouveau terminal capterait un flux de signaux émis depuis T3. Un équipement tiers ou un autre terminal non représenté peut aussi se connecter à tout nœud de réseau par lequel transite un flux de la communication entre deux terminaux parmi T1, T2 et T3. Le procédé de l'invention est applicable à cet équipement ou à cet autre terminal.

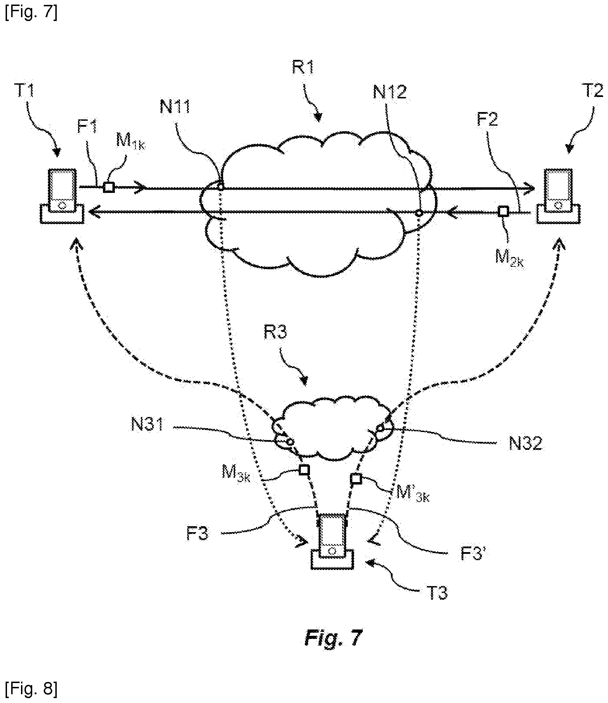

Un autre mode de réalisation de l'invention est montré sur la figure 7, qui représente un environnement comportant deux terminaux T1 et T2 en communication l'un avec l'autre par l'intermédiaire d'un même réseau R1 comportant deux nœuds N11 et N12, mais à laquelle un troisième terminal T3 se connecte pour communiquer avec T1 et T2 par l'intermédiaire d'un deuxième réseau R2 distinct comportant deux nœuds N31 et N32. Le terminal T3 peut capter des signaux de F1 en un nœud N11 et des signaux de F2 en un nœud N12.

Le procédé de l'invention permet de sécuriser l'exploitabilité des signaux émis et reçus par T3 accédant à la communication entre T1 et T2, via le réseau R2 d'un opérateur distinct de celui fournissant un accès à R1.

Comme précédemment, sur le terminal T3, des indices M3k et M'3k d'exploitabilité de signaux dans des flux peuvent être sélectionnés par l'utilisateur U3 pour sécuriser l'exploitabilité des signaux dans un flux F3 transmis depuis T3 vers un nœud N31 du réseau R3 puis vers T1 et dans un flux F3' transmis depuis T3 vers un nœud N32 du même réseau R3, puis vers T2.

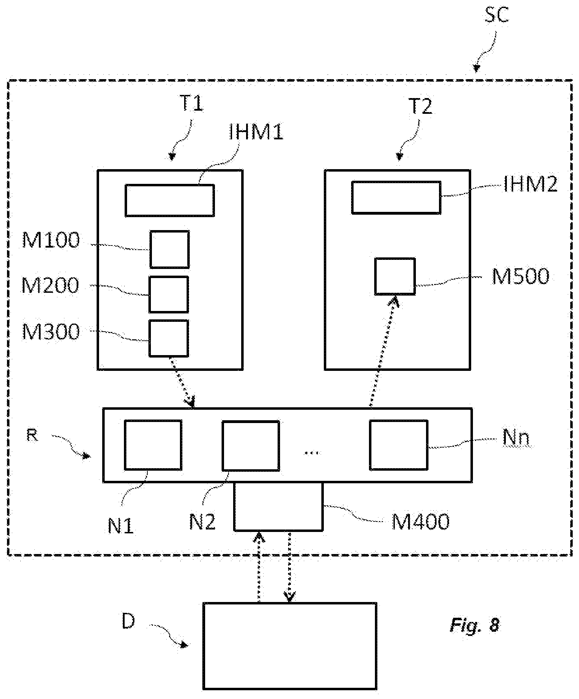

La figure 8, illustre un système SC de communication utilisé pour sécuriser une communication entre deux terminaux T1 et T2 via un réseau R, un équipement D tiers pouvant se connecter à ce réseau, conformément à l'ensemble des modes de réalisation explicités jusqu'à présent.

Le système SC comprend le premier terminal T1, qui lui-même comprend des modules configurés pour mettre en œuvre les étapes et les sous-étapes du procédé. Ces modules sont des composants matériels et/ou logiciels. Un composant logiciel peut être un programme d'ordinateur ou un sous-programme de celui-ci, apte à mettre en œuvre une fonction ou un ensemble de fonctions selon le module concerné.

Le terminal T1 comprend un module M100 d'initialisation configuré pour envoyer un message d'invitation à une communication entre T1 et T2. Le module M100 peut aussi être configuré pour mettre en œuvre l'étape E100 et/ou permettre à l'utilisateur U1 de démarrer le terminal T1, d'identifier l'utilisateur U1, d'initialiser d'autres modules de T1 ou encore d'authentifier T1 sur un ou plusieurs réseaux.

Le terminal T1 comprend en outre un module M200 de sélection, configuré pour permettre à un utilisateur de T1 de sélectionner un indice d'exploitabilité des signaux émis depuis celui-ci. Par exemple, avant l'établissement d'une communication avec un autre terminal, le module M200 propose à l'utilisateur, par exemple via l'interface IHM1 homme-machine de T1, un menu avec différentes options sélectionnables de sécurisation de signaux.

La fonctionnalité peut aussi permettre d'afficher un avertissement ou une icône de sécurisation de signaux donnés lorsqu'un équipement D tiers ou un autre terminal T3 accède à un ou flux ou capte des signaux d'une communication établie entre T1 et T2. Cette icône peut signaler à l'utilisateur la possibilité de modifier la valeur d'un indice d'exploitabilité d'un signal au cours de la communication. Par exemple, en cas d'ajout d'un nouvel utilisateur U3 à la communication via un nouveau terminal T3, l'utilisateur U1 et/ou U2 peut décider de lui interdire l'accès à tous ses signaux audiovisuels pour des raisons de confidentialité.

Selon un mode de réalisation de l'invention, le module M100 et/ou le module M200 sont configurés pour lire, traiter et enregistrer au moins un indice d'exploitabilité fourni par l'utilisateur, et pour l'insérer comme attribut dans un message d'invitation, qui indique si et quand les signaux du flux peuvent être exploités selon le protocole de communication utilisé.

Le terminal T1 émetteur comprend en outre un module M300 de transmission d'un flux vers un réseau R, et notamment vers une pluralité de nœuds N1, N2, ..., Nn de ce réseau par chacun desquels peut transiter un flux de signaux avant d'être transmis vers un module M500 de réception que comprend le terminal T2 destinataire. Ces modules M300 et M500 sont par exemple des antennes d'émission-réception, ou tous autres moyens adaptés pour mettre en œuvre une communication selon l'invention.

De manière non limitative, les terminaux T1 et T2 comprennent chacun un module de communication leur permettant de se connecter à un ou plusieurs réseaux d'un opérateur et d'échanger des flux de signaux avec d'autres dispositifs par leur intermédiaire. Par exemple, le module de communication peut être une interface de téléphonie mobile ou une interface réseau Wifi ou Ethernet.

Le système SC comprend en outre un module M400 configuré pour permettre à un équipement D tiers de se connecter au réseau R. Lorsque cet équipement D est un terminal, le module M400 est configuré pour lui permettre d'envoyer des flux de signaux vers le réseau R, et vers les terminaux T1 et T2.

Selon un mode de réalisation de l'invention, le réseau R ou au moins un nœud du réseau auquel l'équipement D tiers est susceptible de se connecter comprend le module M400.

Lorsqu'un flux de signaux transite par l'un des nœuds N1, N2, ..., Nn et qu'un équipement D tiers se connecte à ce nœud, le module M400 de connexion est configuré pour mettre en œuvre au moins l'une des actions suivantes : interdire à D d'accéder à ces signaux si l'indice d'exploitabilité est un attribut d'interdiction, autoriser D à lire ces signaux si l'indice d'exploitabilité est un attribut de traitement et/ou autoriser D à traiter ou à enregistrer les signaux si l'indice d'exploitabilité est un attribut de post-traitement. En outre, ces actions peuvent être mises en œuvre indépendamment l'une de l'autre en fonction du type de signal.

Selon un mode de réalisation de l'invention, le système SC comprend en outre au moins un circuit intégré compris dans le terminal T1 et/ou T2, dans au moins un nœud du réseau R ou dans tout autre dispositif électronique distinct du système SC. En particulier, ce ou ces circuits intégrés sont configurés pour mettre en œuvre les étapes du procédé de sécurisation d'une communication initiée par le terminal T1 et reçue par le terminal T2.

Ce ou ces circuits intégrés comprennent un espace de stockage, par exemple une mémoire, et une unité de traitement équipée par exemple d'un processeur. L'espace de stockage est par exemple une mémoire non volatile (ROM ou Flash, par exemple), et peut constituer un support d'enregistrement, ce support d'enregistrement pouvant en outre comprendre un programme d'ordinateur.

Lors de l'initialisation, les instructions d'un programme pilotant l'unité de traitement, sont par exemple chargées dans une mémoire vive (RAM, par exemple) non représentée que comprend le système SC avant d'être exécutées par le processeur de l'unité de traitement.

Selon un mode de réalisation de l'invention, ce ou ces circuits intégrés sont configurés pour mettre en œuvre les étapes du procédé de sécurisation d'une communication initiée par le terminal T1 et reçue par le terminal T2.

## Revendications

1. Procédé de demande de sécurisation d'une communication entre un premier (T1) et au moins un deuxième terminal (T2), ledit procédé étant **caractérisé en ce qu'**il comporte:
- une sélection (E200) par le premier terminal d'un indice d'exploitabilité de signaux d'un flux de communication (F1) à destination du au moins un deuxième terminal, l'indice d'exploitabilité de signaux (S1k) comportant un attribut traduisant une règle qui autorise, limite ou interdit l'exploitation par un équipement tiers (D) des signaux dans le flux ;
- un envoi, par le premier terminal, de l'indice d'exploitabilité des signaux dans un message d'initiation de la transmission du flux de communication, vers un nœud (N1) d'un réseau de communication (R) ;
- une transmission (E300) des signaux du flux de communication, par le premier terminal, vers le au moins un deuxième terminal, via ledit nœud (N1) du réseau de communication (R).

2. Procédé selon la revendication 1, chaque terminal étant configuré pour interagir avec un utilisateur (U1, U2) via une interface (IHM1, IHM2) homme-machine correspondante, ledit procédé comprenant en outre:
- une connexion (E400) d'un équipement (D) tiers au nœud en fonction de l'indice d'exploitabilité ; et
- une réception (E500), par ledit au moins un deuxième terminal, du flux depuis le nœud.

3. Procédé selon la revendication 2, dans lequel la connexion comprend une interdiction (E410) d'accès dudit équipement tiers aux signaux si l'indice d'exploitabilité est un attribut d'interdiction.

4. Procédé selon l'une des revendications 2 ou 3, dans lequel la connexion comprend une autorisation (E420) de lecture des signaux par l'équipement tiers si l'indice d'exploitabilité est un attribut de traitement.

5. Procédé selon l'une quelconque des revendications précédentes, dans lequel la connexion comprend une autorisation (E430) de post-traitement des signaux par l'équipement tiers si l'indice d'exploitabilité est un attribut de post-traitement.

6. Procédé selon l'une quelconque des revendications précédentes, dans lequel la communication est mise en œuvre via un protocole de communication choisi parmi : un protocole RCS, un protocole SDP, un protocole RTSP, un protocole MSRP et/ou un protocole SIP.

7. Procédé selon l'une quelconque des revendications précédentes, dans lequel la connexion comprend une modification de l'indice d'exploitabilité par le premier terminal.

8. Procédé selon l'une quelconque des revendications précédentes, dans lequel le au moins un signal dans le flux est un type de signal dont dépend l'indice d'exploitabilité et choisi parmi : un signal textuel, un signal audio, un signal visuel et/ou un signal audiovisuel.

9. Procédé selon l'une quelconque des revendications précédentes, dans lequel l'équipement tiers est au moins un troisième (T3) terminal configuré pour interagir avec un utilisateur (U3) correspondant via une interface homme-machine (IHM3).

10. Système (SC) de communication configuré pour sécuriser une communication entre un premier (T1) et au moins un deuxième (T2) terminal, ledit système étant **caractérisé en ce que** :
- ledit premier (T1) terminal, comprenant un module (M200) de sélection d'un indice (M1k) d'exploitabilité de signaux (S1k) dans un flux (F1) et comprenant un module (M300) de transmission du flux vers au moins un nœud (N1) d'un réseau (R) ; dans lequel l'indice d'exploitabilité de signaux comporte un attribut traduisant une règle qui autorise, limite ou interdit l'exploitation des signaux dans le flux ; dans lequel le premier terminal comprend en outre un module (M100) d'initiation, ledit module étant configuré pour envoyer un message d'initiation de la transmission, ledit message comprenant l'indice d'exploitabilité,
- un module (M400) de connexion du nœud à un équipement (D) tiers en fonction de l'indice d'exploitabilité ; et
- ledit au moins un deuxième (T2) terminal, comprenant un module (M500) de réception du flux depuis le nœud.

11. Système de communication selon la revendication 10, dans lequel ledit module de connexion interdit ledit équipement tiers d'accéder aux signaux si l'indice d'exploitabilité est un attribut d'interdiction.

12. Système de communication selon l'une des revendications 10 ou 11, dans lequel le module de connexion autorise l'équipement tiers à lire les signaux si l'indice d'exploitabilité est un attribut de traitement.

13. Système de communication selon l'une quelconque des revendications 10 à 12, dans lequel le module de connexion autorise l'équipement tiers à post-traiter les signaux si l'indice d'exploitabilité est un attribut de post-traitement.

14. Terminal de communication (T1) apte à émettre une demande de sécurisation d'une communication avec au moins un autre terminal (T2), **caractérisé en ce qu'**il comporte:
- un module de sélection (M200) configuré pour sélectionner (E200) un indice d'exploitabilité de signaux d'un flux de communication (F1) à destination du au moins un autre terminal, l'indice d'exploitabilité de signaux (S1k) comportant un attribut traduisant une règle qui autorise, limite ou interdit l'exploitation par un équipement tiers (D) des signaux dans le flux ;
- un module d'initiation (M100), configuré pour envoyer l'indice d'exploitabilité des signaux dans un message d'initiation de la transmission du flux de communication, vers un nœud (N1) d'un réseau de communication (R) ;
- un module de transmission (M300) configuré pour transmettre (E300) des signaux du flux de communication, vers le au moins un autre terminal, via ledit nœud (N1) du réseau de communication (R).

15. Programme d'ordinateur comportant des instructions pour l'exécution d'un procédé selon l'une quelconque des revendications 1 à 9 lorsque ledit programme est exécuté par un processeur.

## Patentansprüche

1. Verfahren zur Anforderung der Sicherung einer Kommunikation zwischen einem ersten (T1) und mindestens einem zweiten Endgerät (T2), wobei das Verfahren **dadurch gekennzeichnet ist, dass** es umfasst:
- eine Wahl (E200), durch das erste Endgerät, eines Benutzbarkeitsindex von Signalen eines Kommunikationsflusses (F1) in Richtung des mindestens einen zweiten Endgerätes, wobei der Benutzbarkeitsindex von Signalen (S1k) ein Attribut aufweist, das eine Regel zum Ausdruck bringt, welche die Benutzung der Signale in dem Kommunikationsfluss durch ein Fremdgerät (D) erlaubt, begrenzt oder verbietet;
- ein Senden, durch das erste Endgerät, des Benutzbarkeitsindex der Signale in einer Initiierungsnachricht der Übertragung des Kommunikationsflusses an einen Knoten (N1) eines Kommunikationsnetzes (R);
- eine Übertragung (E300) der Signale des Kommunikationsflusses, durch das erste Endgerät, an das mindestens eine zweite Endgerät über den Knoten (N1) des Kommunikationsnetzes (R).

2. Verfahren nach Anspruch 1, wobei jedes Endgerät dafür ausgelegt ist, mit einem Benutzer (U1, U2) über eine entsprechende Mensch-Maschine-Schnittstelle (IHM1, IHM2) zu interagieren, wobei das Verfahren außerdem umfasst:
- eine Verbindung (E400) eines Fremdgerätes (D) mit dem Knoten in Abhängigkeit von dem Benutzbarkeitsindex; und
- einen Empfang (E500), durch das mindestens eine zweite Endgerät, des Kommunikationsflusses von dem Knoten.

3. Verfahren nach Anspruch 2, wobei die Verbindung ein Verbot (E410) des Zugriffs des Fremdgerätes auf die Signale umfasst, falls der Benutzbarkeitsindex ein Verbotsattribut ist.

4. Verfahren nach einem der Ansprüche 2 oder 3, wobei die Verbindung eine Erlaubnis (E420) des Lesens der Signale durch das Fremdgerät umfasst, falls der Benutzbarkeitsindex ein Verarbeitungsattribut ist.

5. Verfahren nach einem der vorhergehenden Ansprüche, wobei die Verbindung eine Erlaubnis (E430) der Nachverarbeitung der Signale durch das Fremdgerät umfasst, falls der Benutzbarkeitsindex ein Nachverarbeitungsattribut ist.

6. Verfahren nach einem der vorhergehenden Ansprüche, wobei die Kommunikation über ein Kommunikationsprotokoll durchgeführt wird, welches ausgewählt aus: einem RCS-Protokoll, einem SDP-Protokoll, einem RTSP-Protokoll, einem MSRP-Protokoll und/oder einem SIP-Protokoll.

7. Verfahren nach einem der vorhergehenden Ansprüche, wobei die Verbindung eine Änderung des Benutzbarkeitsindex durch das erste Endgerät umfasst.

8. Verfahren nach einem der vorhergehenden Ansprüche, wobei das mindestens eine Signal in dem Kommunikationsfluss ein Signal eines Typs ist, von dem der Benutzbarkeitsindex abhängt und der ausgewählt ist aus: einem Textsignal, einem Audiosignal, einem visuellen Signal und/oder einem audiovisuellen Signal.

9. Verfahren nach einem der vorhergehenden Ansprüche, wobei das Fremdgerät mindestens ein drittes (T3) Endgerät ist, das dafür ausgelegt ist, mit einem entsprechenden Benutzer (U3) über eine Mensch-Maschine-Schnittstelle (IHM3) zu interagieren.

10. Kommunikationssystem (SC), welches dafür ausgelegt ist, eine Kommunikation zwischen einem ersten (T1) und mindestens einem zweiten (T2) Endgerät zu sichern, wobei das System **dadurch gekennzeichnet ist, dass** es umfasst:
- das erste (T1) Endgerät, das ein Modul (M200) zur Wahl eines Benutzbarkeitsindex (M1k) von Signalen (S1k) in einem Kommunikationsfluss (F1) umfasst und ein Modul (M300) zur Übertragung des Kommunikationsflusses an mindestens einen Knoten (N1) eines Netzes (R) umfasst; wobei der Benutzbarkeitsindex von Signalen ein Attribut aufweist, das eine Regel zum Ausdruck bringt, welche die Benutzung der Signale in dem Kommunikationsfluss erlaubt, begrenzt oder verbietet; wobei das erste Endgerät außerdem ein Modul (M100) zur Initiierung umfasst, wobei dieses Modul dafür ausgelegt ist, eine Initiierungsnachricht der Übertragung zu senden, wobei die Nachricht den Benutzbarkeitsindex umfasst,
- ein Modul (M400) zur Verbindung des Knotens mit einem Fremdgerät (D) in Abhängigkeit von dem Benutzbarkeitsindex; und
- das mindestens eine zweite (T2) Endgerät, das ein Modul (M500) zum Empfang des Kommunikationsflusses von dem Knoten umfasst.

11. Kommunikationssystem nach Anspruch 10, wobei das Verbindungsmodul dem Fremdgerät verbietet, auf die Signale zuzugreifen, falls der Benutzbarkeitsindex ein Verbotsattribut ist.

12. Kommunikationssystem nach einem der Ansprüche 10 oder 11, wobei das Verbindungsmodul dem Fremdgerät erlaubt, die Signale zu lesen, falls der Benutzbarkeitsindex ein Verarbeitungsattribut ist.

13. Kommunikationssystem nach einem der Ansprüche 10 bis 12, wobei das Verbindungsmodul dem Fremdgerät erlaubt, die Signale nachzuverarbeiten, falls der Benutzbarkeitsindex ein Nachverarbeitungsattribut ist.

14. Kommunikationsendgerät (T1), welches geeignet ist, eine Anforderung der Sicherung einer Kommunikation mit mindestens einem weiteren Endgerät (T2) zu senden, **dadurch gekennzeichnet, dass** es aufweist:
- ein Wahlmodul (M200), das dafür ausgelegt ist, einen Benutzbarkeitsindex von Signalen eines Kommunikationsflusses (F1) in Richtung des mindestens einen weiteren Endgerätes zu wählen (E200), wobei der Benutzbarkeitsindex von Signalen (S1k) ein Attribut aufweist, das eine Regel zum Ausdruck bringt, welche die Benutzung der Signale in dem Kommunikationsfluss durch ein Fremdgerät (D) erlaubt, begrenzt oder verbietet;
- ein Initiierungsmodul (M100), das dafür ausgelegt ist, den Benutzbarkeitsindex der Signale in einer Initiierungsnachricht der Übertragung des Kommunikationsflusses an einen Knoten (N1) eines Kommunikationsnetzes (R) zu senden;
- ein Übertragungsmodul (M300), das dafür ausgelegt ist, Signale des Kommunikationsflusses an das mindestens eine weitere Endgerät über den Knoten (N1) des Kommunikationsnetzes (R) zu übertragen (E300).

15. Computerprogramm, welches Anweisungen zur Ausführung eines Verfahrens nach einem der Ansprüche 1 bis 9, wenn das Programm von einem Prozessor ausgeführt wird, umfasst.

## Claims

1. Method for requesting communication between a first terminal (T1) and at least one second terminal (T2) to be made secure, said method being **characterized in that** it comprises:
- the first terminal selecting (E200) a usability index of signals of a communication stream (F1) to the at least one second terminal, the usability index of signals (S1k) comprising an attribute which expresses a rule which authorizes, limits or prohibits the use of the signals in the stream by a third-party device (D);
- the first terminal sending the usability index of the signals in a message for initiating the transmission of the communication stream to a node (N1) of a communication network (R);
- the first terminal transmitting (E300) the signals of the communication stream to the at least one second terminal via said node (N1) of the communication network (R).

2. Method according to Claim 1, each terminal being configured to interact with a user (U1, U2) via a corresponding human-machine interface (IHM1, IHM2), said method further comprising:
- connecting (E400) a third-party device (D) to the node depending on the usability index; and
- said at least one second terminal receiving (E500) the stream from the node.

3. Method according to Claim 2, wherein connecting comprises prohibiting (E410) said third-party device from accessing the signals if the usability index is a prohibition attribute.

4. Method according to one of Claims 2 and 3, wherein connecting comprises authorizing (E420) the third-party device to read the signals if the usability index is a processing attribute.

5. Method according to any one of the preceding claims, wherein connecting comprises authorizing (E430) the third-party device to post-process the signals if the usability index is a post-processing attribute.

6. Method according to any one of the preceding claims, wherein communication is implemented via a communication protocol chosen from: an RCS protocol, an SDP, an RTSP, an MSRP and/or an SIP.

7. Method according to any one of the preceding claims, wherein connecting comprises the first terminal modifying the usability index.

8. Method according to any one of the preceding claims, wherein the at least one signal in the stream is a type of signal on which the usability index depends and chosen from: a textual signal, an audio signal, a visual signal and/or an audiovisual signal.

9. Method according to any one of the preceding claims, wherein the third-party device is at least one third terminal (T3) configured to interact with a corresponding user (U3) via a human-machine interface (IHM3).

10. Communication system (SC) configured to make communication between a first terminal (T1) and at least one second terminal (T2) secure, said system being **characterized in that**:
- said first terminal (T1) comprises a module (M200) for selecting a usability index (M1k) of signals (S1k) in a stream (F1) and comprises a module (M300) for transmitting the stream to at least one node (N1) of a network (R); wherein the usability index of signals comprises an attribute which expresses a rule which authorizes, limits or prohibits the use of the signals in the stream; wherein the first terminal further comprises an initiation module (M100), said module being configured to send a message for initiating the transmission, said message comprising the usability index,
- a module (M400) for connecting the node to a third-party device (D) depending on the usability index; and
- said at least one second terminal (T2) comprises a module (M500) for receiving the stream from the node.

11. Communication system according to Claim 10, wherein said connection module prohibits said third-party device from accessing the signals if the usability index is a prohibition attribute.

12. Communication system according to one of Claims 10 or 11, wherein the connection module authorizes the third-party device to read the signals if the usability index is a processing attribute.

13. Communication system according to any one of Claims 10 to 12, wherein the connection module authorizes the third-party device to post-process the signals if the usability index is a post-processing attribute.

14. Communication terminal (T1) which is able to send a request to make communication with at least one other terminal (T2) secure, **characterized in that** it comprises:
- a selection module (M200) configured to select (E200) a usability index of signals of a communication stream (F1) to the at least one other terminal, the usability index of signals (S1k) comprising an attribute which expresses a rule which authorizes, limits or prohibits the use of the signals in the stream by a third-party device (D);
- an initiation module (M100) configured to send the usability index of the signals in a message for initiating the transmission of the communication stream to a node (N1) of a communication network (R);
- a transmission module (M300) configured to transmit (E300) the signals of the communication stream to the at least one other terminal via said node (N1) of the communication network (R).

15. Computer program comprising instructions for executing a method according to any one of Claims 1 to 9 when said program is executed by a processor.
